# EUROPEAN PATENT APPLICATION

(11) **EP 4 769 641 A1**
(43) Date of publication of application: **01.07.2026**
(21) Application number: 24907928.6
(22) Date of filing: 06.12.2024
(51) Int. Cl.: H01M 10/48, H01M 50/519, H01M 50/507, H01M 50/107, H01M 50/581

(54) **BATTERY ASSEMBLY**

(30) Priority: 18.12.2023 KR 20230184991
(71) Applicant: LG Energy Solution, Ltd., Seoul 07335 (KR)
(72) Inventor: LIM, Hyun Jung, Daejeon 34122 (KR)
(74) Representative: Goddar, Heinz J.
(86) International application number: PCT/KR2024/019995
(87) International publication number: WO 2025/135644

(57) **Abstract**

The present disclosure relates to a battery assembly. The battery assembly according to an embodiment of the present disclosure may include a battery cell, a circuit board coupled to the battery cell and electrically connected to the battery cell, a chip thermistor configured to sense a temperature of the battery cell, and electrically connected to the circuit board, and a first busbar extended between a negative electrode of the battery cell and the circuit board to electrically connect the negative electrode of the battery cell to the circuit board, and electrically connected to the chip thermistor.

## Description

### TECHNICAL FIELD

### CROSS-REFERENCE TO RELATED APPLICATIONS

The present application claims priority to Korean Patent Application No. 10-2023-0184991 filed on December 18, 2023 in the Republic of Korea, the disclosure of which is incorporated herein by reference.

### TECHNICAL FIELD

The present disclosure relates to a battery assembly.

### BACKGROUND ART

Among batteries used in battery packs of e-cigarettes, 1T1S batteries raise a cell safety issue. Laptop computer battery packs or vacuum cleaner battery packs using Gauge ICs generally have a permanent failure functionality of diagnosing overcurrent or overtemperature in the packs and making batteries permanently unusable when anomaly is detected.

However, currently, because e-cigarette battery packs only have an overcharge, overdischarge, overcurrent protection operation without Gauge ICs, battery cells can be used without time limit. When battery cells are used for a long time, the battery cells may degrade, causing explosions of the battery cells in the event of internal shorts.

In the case of a battery cell in abnormal condition, in an internal short situation, the temperature of the battery cell sharply rises during charging/discharging. To prevent it, there is a need for a battery assembly in which the cell temperature is accurately monitored and a current circuit is interrupted when the cell is in abnormal condition.

The above-described background was possessed or obtained by the inventors in the conception of the present disclosure, and is not necessarily known technology that was publicly available before filing an application.

### SUMMARY

### TECHNICAL PROBLEM

The present disclosure is designed to solve the above-described problems, and
an object according to an embodiment of the present disclosure is to provide a battery assembly capable of efficiently sensing the temperature of a battery cell.

An object of according to an embodiment of the present disclosure is to provide a battery assembly capable of efficiently interrupting a charge/discharge circuit when the temperature of a battery cell is abnormal, thereby improving safety.

### TECHNICAL SOLUTION

A battery assembly according to an embodiment of the present disclosure may include a battery cell, a circuit board coupled to the battery cell and electrically connected to the battery cell, a chip thermistor configured to sense a temperature of the battery cell, and electrically connected to the circuit board, and a first busbar extended between a negative electrode of the battery cell and the circuit board to electrically connect the negative electrode of the battery cell to the circuit board, and electrically connected to the chip thermistor.

The battery assembly may further include a second busbar extended between the chip thermistor and the circuit board to electrically connect the chip thermistor to the circuit board, and spaced apart from the first busbar.

The chip thermistor may be disposed between the first busbar and the second busbar to electrically connect the first busbar to the second busbar.

The first busbar and the second busbar may have different widths.

The first busbar may have a larger width than the second busbar.

The first busbar may include a busbar body extended from the negative electrode of the battery cell, and a busbar arm extended from an end portion of the busbar body to the circuit board and having a smaller width than the busbar body.

The chip thermistor may connect the busbar arm to the second busbar.

The battery cell may have a cylindrical shape having a length direction, and the circuit board may be coupled to an end portion of the battery cell in the length direction.

The chip thermistor may be placed apart from two end portions of the battery cell in the length direction.

The chip thermistor may be located at a central part of the battery cell in the length direction.

The battery assembly may further include an interrupt unit configured to interrupt an electric current based on temperature data of the battery cell sensed from the chip thermistor.

The interrupt unit may further include a first interrupt unit coupled to the busbar arm, wherein the first interrupt unit is open to interrupt the electric current when the temperature of the battery cell is higher than a preset reference temperature.

The first interrupt unit may connect the busbar arm to the circuit board.

The interrupt unit may further include a second interrupt unit coupled to the circuit board and electrically connected to the circuit board, and configured to interrupt the electric current upon receiving a signal from the circuit board when a temperature change of the battery cell is larger than a preset reference temperature change.

### ADVANTAGEOUS EFFECTS

The battery assembly according to an embodiment of the present disclosure may efficiently sense the temperature of the battery cell.

The battery assembly according to an embodiment of the present disclosure may efficiently interrupt the charge/discharge circuit when the temperature of the battery cell is abnormal, thereby improving safety.

Besides, the effects of the present disclosure may include effects that can be easily predict by those skilled in the art from the embodiments of the present disclosure.

### BRIEF DESCRIPTION OF THE DRAWINGS

FIG. 1 is a front view showing a schematic shape of a battery assembly according to Comparative Example of the present disclosure.
FIG. 2 is a plane view showing a connection of a circuit board and a busbar of a battery assembly according to Comparative Example of the present disclosure.
FIG. 3 is a front view showing a schematic structure of a battery assembly according to Embodiment 1 of the present disclosure.
FIG. 4 is a plane view showing a connection of a busbar and a circuit board of a battery assembly according to Embodiment 1 of the present disclosure.
FIG. 5 is an exploded perspective view of a battery assembly according to Embodiment 1 of the present disclosure.
FIG. 6 is a schematic circuit diagram showing an electrical connection structure of a battery assembly according to Embodiment 1 of the present disclosure.
FIG. 7 is a front view showing a schematic structure of a battery assembly according to Embodiment 2 of the present disclosure.
FIG. 8 is a flowchart showing a current interruption mechanism of a battery assembly according to Embodiment 2 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. The following description is one of aspects of the embodiments, and in describing an embodiment, a certain detailed description of known functions or elements is omitted for clarity of description of the present disclosure.

In affixing the reference numerals to the elements in each drawing, the identical or similar reference numerals are affixed to the identical or similar elements throughout the specification. An element included in any one embodiment and an element including a shared function will be described using the same name in other embodiment. The terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

Additionally, the present disclosure is not limited to the above-described embodiments, and a variety of modifications and changes may be made thereto by persons having ordinary skill in the technical field pertaining to the present disclosure from this disclosure. Therefore, the aspect of the present disclosure should not be limited to the disclosed embodiments, and it should be understood that the appended claims and their equal or equivalent variations fall within the scope of aspects of the present disclosure.

### Comparative Example

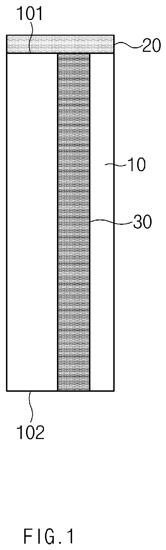

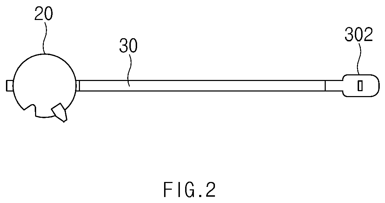

FIGS. 1 and 2 show a battery assembly according to Comparative Example of the present disclosure. Specifically, FIG. 1 is a front view showing a schematic shape of a battery assembly according to Comparative Example of the present disclosure, and FIG. 2 is a plane view showing a connection of a circuit board 20 and a busbar 30 of the battery assembly according to Comparative Example of the present disclosure.

Referring to FIGS. 1 and 2, the battery assembly according to Comparative Example of the present disclosure may include a battery cell 10, the circuit board 20, and the busbar 30.

The battery cell 10 may be formed in a cylindrical shape having a length direction. The battery cell 10 may have a positive electrode 101 and a negative electrode 102. The positive electrode 101 and the negative electrode 102 of the battery cell 10 may be formed at two end portions of the cylindrical battery cell 10 in the length direction. For example, the positive electrode 101 may be formed at the upper end portion of the battery cell 10, and the negative electrode 102 may be formed at the lower end portion of the battery cell 10. Each of the positive electrode 101 and the negative electrode 102 of the battery cell 10 may be electrically connected to the circuit board 20.

The circuit board 20 may be coupled to the battery cell 10 and electrically connected to the battery cell 10. The circuit board 20 may be coupled to one end portion of the battery cell 10 in the length direction. The circuit board 20 may be, for example, coupled to the end portion of the battery cell 10 in the length direction where the positive electrode 101 is formed. The circuit board 20 may be electrically connected to both the positive electrode 101 and the negative electrode 102 of the battery cell 10. For example, the circuit board 20 that overlaps the positive electrode 101 of the battery cell 10 may be in direct contact with and electrically connected to the positive electrode 101 of the battery cell 10, and may be electrically connected to the negative electrode 102 of the battery cell 10 by the medium of the busbar 30 as described below. The circuit board 20 may be electrically connected to the battery cell 10 and play a role in determining and controlling the electrical state of the battery cell 10.

The busbar 30 may be configured to electrically connect the negative electrode 102 of the battery cell 10 to the circuit board 20. The busbar 30 may be formed in a shape of a conductive plate extended along the length direction of the battery cell 10. One end portion of the busbar 30 in the length direction may be connected to the circuit board 20, and a negative plate 302 formed in contact with and electrically connected to the negative electrode 102 of the battery cell 10 may be disposed at the other end portion of the busbar 30 in the length direction.

In the case of the battery assembly according to Comparative Example of the present disclosure, to sense the temperature of the battery cell 10, a temperature sensor such as a chip thermistor, for example, a chip Negative Temperature Coefficient (NTC) thermistor may be embedded in the circuit board 20. In this case, there is a limitation in getting an accurate temperature due to the distance between the central part of the battery cell 10 in the length direction where highest temperature heat is generated and the temperature sensing thermistor, and when overheating occurs, it is impossible to interrupt a current circuit, raising a battery stability issue.

### Embodiment 1

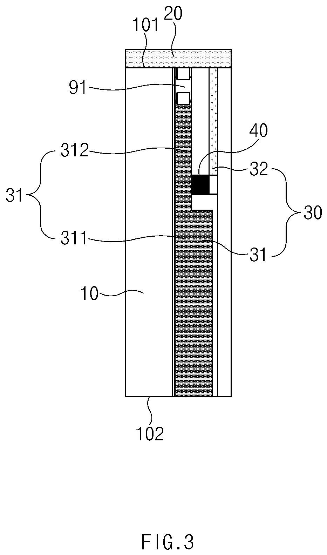

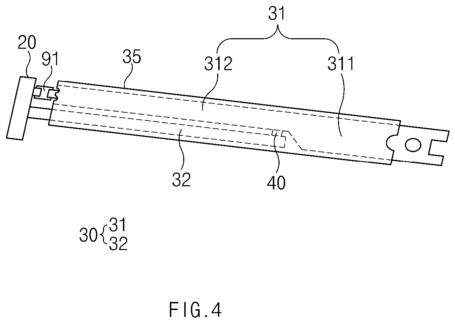

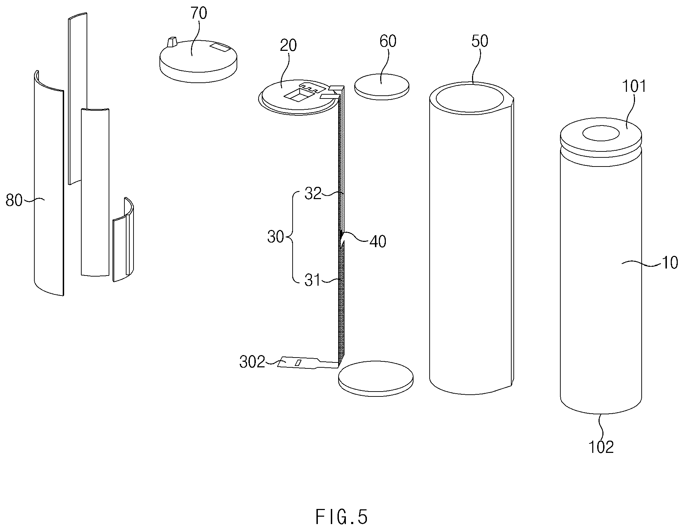

FIGS. 3 to 5 show a battery assembly according to Embodiment 1 of the present disclosure. Specifically, FIG. 3 is a front view showing a schematic structure of the battery assembly according to Embodiment 1 of the present disclosure, and FIG. 4 is a plane view showing a connection of the busbar 30 and the circuit board 20 of the battery assembly according to Embodiment 1 of the present disclosure. FIG. 5 is an exploded perspective view of the battery assembly according to Embodiment 1 of the present disclosure.

The components of the battery assembly according to Embodiment 1 of the present disclosure shown in FIGS. 3 to 5 are schematically shown for convenience of description, and it should be noted that the shape and placement of each component is not limited to what has been particularly shown.

Referring to FIGS. 3 and 4, the battery assembly according to Embodiment 1 of the present disclosure may include the battery cell 10, the circuit board 20, the busbar 30 and the chip thermistor 40.

The battery cell 10 may be formed in a cylindrical shape having a length direction. The battery cell 10 may have the positive electrode 101 and the negative electrode 102. The positive electrode 101 and the negative electrode 102 of the battery cell 10 may be formed at two end portions of the cylindrical battery cell 10 in the length direction. For example, the positive electrode 101 may be formed at the upper end portion of the battery cell 10, and the negative electrode 102 may be formed at the lower end portion of the battery cell 10. Each of the positive electrode 101 and the negative electrode 102 of the battery cell 10 may be electrically connected to the circuit board 20.

The circuit board 20 may be coupled to the battery cell 10 and electrically connected to the battery cell 10. The circuit board 20 may be a printed circuit board (PCB) configured to electrically control the state of the battery cell 10. The circuit board 20 may form at least part of a battery management system (BMS). As described below, the circuit board 20 may include a Micro Control Unit (MCU). The circuit board 20 may be formed in a shape of a plate having a predetermined thickness, and be coupled to an end portion of the battery cell 10 in the length direction.

The circuit board 20 may be, for example, coupled to the end portion of the battery cell 10 in the length direction where the positive electrode 101 is formed. The circuit board 20 may be electrically connected to both the positive electrode 101 and the negative electrode 102 of the battery cell 10. For example, the circuit board 20 that overlaps the positive electrode 101 of the battery cell 10 may be in direct contact with and electrically connected to the positive electrode 101 of the battery cell 10, and may be electrically connected to the negative electrode 102 of the battery cell 10 by the medium of a first busbar 31 as described below. The circuit board 20 may be electrically connected to the battery cell 10 and play a role in determining and controlling the electrical state of the battery cell 10.

The busbar 30 may include the first busbar 31. The first busbar 31 may be configured to electrically connect the negative electrode 102 of the battery cell 10 to the circuit board 20. The first busbar 31 may be formed in a shape of a conductive plate extended along the length direction of the battery cell 10. The first busbar 31 may be, for example, a plate made of nickel. One end portion of the first busbar 31 in the length direction may be connected to the circuit board 20, and the negative plate 302 formed in contact with and electrically connected to the negative electrode 102 of the battery cell 10 may be disposed at the other end portion of the first busbar 31 in the length direction. The first busbar 31 may contact and be electrically connected to the chip thermistor 40 as described below.

Because the first busbar 31 connects the negative electrode of the battery cell 10 to the circuit board 20, and a large amount of electric current flows in the first busbar 31, the first busbar 31 may have a larger width than a second busbar 32 as described below.

The first busbar 31 may include a busbar body 311 and a busbar arm 312. The busbar body 311 may be extended from the negative electrode 102 of the battery cell 10. The busbar body 311 may have a preset width and thickness and be extended to a predetermined length in a direction from the negative electrode 102 of the battery cell 10 to the circuit board 20. For example, one end portion of the busbar body 311 may be located at the negative electrode 102 of the battery cell 10, and the other end portion may be located at the central area of the battery cell 10 in the length direction. The busbar arm 312 may be extended in a direction from the other end portion of the busbar body 311 to the circuit board 20. Likewise, the busbar arm 312 may have a preset width and thickness and be extended toward the circuit board 20, and the width of the busbar arm 312 may be smaller than the width of the busbar body 311. The chip thermistor 40 as described below may be connected to the busbar arm 312.

The busbar 30 may further include the second busbar 32. The first busbar 31 and the second busbar 32 may be arranged such that they are extended in the length direction along the outer wall of the cylindrical battery cell 10.

The second busbar 32 may be configured to electrically connect the chip thermistor 40 as described below to the circuit board 20. Specifically, the second busbar 32 may be configured to electrically connect the positive electrode of the chip thermistor 40 to the circuit board 20. The second busbar 32 may have a predetermined thickness and width between the chip thermistor 40 and the circuit board 20 and be extended in the length direction of the battery cell 10. One end portion of the second busbar 32 may be connected to the circuit board 20, and the other end portion of the second busbar 32 may be connected to the chip thermistor 40. The other end portion of the second busbar 32 connected to the chip thermistor 40 may be located at the central area of the battery cell 10 in the length direction. In other words, the second busbar 31 may be shorter in length than the first busbar 31. The second busbar 32 may be formed in a shape of a conductive plate, and made of, for example, nickel in the same way as the first busbar 31.

The second busbar 32 may be disposed apart from the first busbar 31. The second busbar 32 may be spaced a predetermined distance apart from the first busbar 31 in the circumferential direction of the battery cell 10. The second busbar 32 may be spaced apart from the busbar arm 312 of the first busbar 31 in parallel to each other.

The chip thermistor 40 may be configured to sense the temperature of the battery cell 10. The chip thermistor 40 may be formed in a shape of a chip, and may be an NTC thermistor having a reduction in resistance with increasing temperature. Because the chip thermistor 40 senses the temperature by the medium of a change in magnitude of electric current with a change in resistance, the chip thermistor 40 may have a negative terminal and a positive terminal.

The chip thermistor 40 may be configured to connect the first busbar 31 to the second busbar 32. The chip thermistor 40 may be disposed in contact with both the first busbar 31 and the second busbar 32 between the first busbar 31 and the second busbar 32, to electrically connect the first busbar 31 to the second busbar 32. More specifically, the chip thermistor 40 may connect the other end portion of the second busbar 32 to the busbar arm 312. By this placement, the chip thermistor 40 may be placed apart from the two end portions of the battery cell 10 in the length direction. More preferably, the chip thermistor 40 may be located at the central part of the battery cell 10 in the length direction, thereby effectively sensing the temperature of the central part of the battery cell 10 where the largest amount of heat is generated.

The first busbar 31 electrically connected to the negative electrode 102 of the battery cell 10 may be connected to the negative terminal of the chip thermistor 40, and the second busbar 32 connected to the positive electrode of the circuit board 20 electrically connected to the positive electrode 101 of the battery cell 10 may be connected to the positive terminal of the chip thermistor 40. As the resistance of the chip thermistor 40 changes with a change in temperature of the battery cell 10, there may be a change in amount of electric current flowing in the chip thermistor 40 between the first busbar 31 and the second busbar 32, and the temperature of the battery cell 10 may be sensed by the medium of it.

The battery assembly according to Embodiment 1 of the present disclosure may further include a first interrupt unit 91. The first interrupt unit 91 may be configured to interrupt the electric current based on temperature data of the battery cell sensed from the chip thermistor 40. The first interrupt unit 91 may be, for example, a thermal cut-off (TCO) device that is open to interrupt the electric current when the temperature of the battery cell 10 is higher than a preset temperature.

The first interrupt unit 91 may be disposed to connect the first busbar 31 to the circuit board 20 where a large amount of electric current is conducted. Specifically, the first interrupt unit 91 may connect the other end portion of the first busbar 31 in the length direction to the circuit board 20. The first interrupt unit 91 may be disposed between the busbar arm 312 of the first busbar 31 and the circuit board 20 to electrically connect the first busbar 31 to the circuit board 20.

When overcurrent flows in the first busbar 31 electrically connecting the negative electrode 102 of the battery cell 10 to the circuit board 20, the first interrupt unit 91 (for example, TCO) may be open to temporarily interrupt a charge/discharge circuit.

The chip thermistor 40, the first busbar 31, the second busbar 32 and the first interrupt unit 91 of the battery assembly according to Embodiment 1 of the present disclosure may be connected to form a single component. In other words, the chip thermistor 40, the first busbar 31, the second busbar 32 and the first interrupt unit 91 may be incorporated into one, thereby greatly simplifying the structure of the assembly, and improving the efficiency of the battery assembly manufacturing process.

The battery assembly according to Embodiment 1 of the present disclosure may further include a cover unit 35 (FIG. 4). The cover unit 35 may be configured to cover the first busbar 31, the second busbar 32 and the chip thermistor 40 with an insulating sheet material. By adopting the cover unit 35, it may be possible to prevent an electrical short caused by a direct contact between the first busbar 31 and the second busbar 32, and significantly reduce the exposure of the chip thermistor 40 and its consequential damage, or failure of the connection with the busbar 30.

Referring to FIG. 5, the battery assembly according to Embodiment 1 of the present disclosure may further include an outer packaging unit 50, an insulation unit 60, a cap 70, and a taping unit 80.

The outer packaging unit 50 may cover the outer peripheral surface of the battery cell 10 to protect the battery cell 10. The outer packaging unit 50 may be formed of a film having elasticity, and may be, for example, a heat shrink film that shrinks when heated.

The insulation unit 60 may be formed in a shape of an insulation tape (a foam tape) to prevent an unnecessary electrical contact and ensure insulation, and may have a circular shape that the insulation unit 60 overlaps the battery cell 10 having the cylindrical shape in the length direction. The insulation unit 60 may include a pair of insulation units 60, each corresponding to each of the positive electrode 101 and the negative electrode 102 of the battery cell 10.

The cap 70 may be a rigid body having rigidity and be coupled to the circuit board 20 such that the cap 70 overlaps the circuit board 20 to protect the electrically coupled part of the battery cell 10 and the circuit board 20 that overlaps the battery cell 10. Likewise, the cap 70 may be formed in a circular shape that conforms to the shape of the battery cell 10 having the cylindrical shape. The taping unit 80 may be configured to secure the other components attached to the battery cell 10 including the busbar 30 to the battery cell 10.

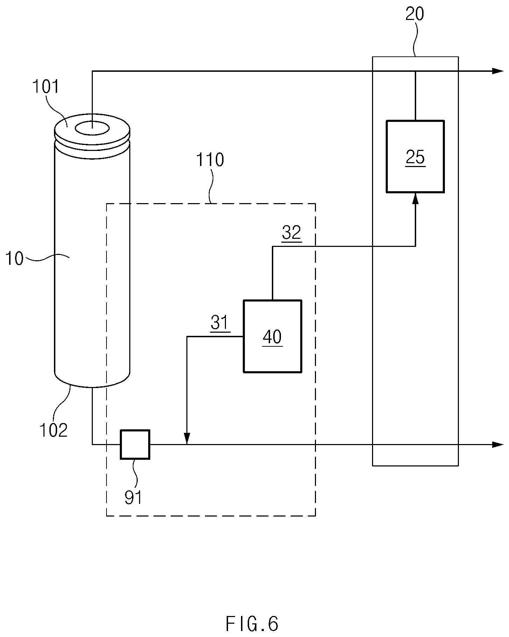

FIG. 6 is a schematic circuit diagram showing the electrical connection structure of the battery assembly according to Embodiment 1 of the present disclosure.

Referring to FIG. 6, the first busbar 31 of the battery assembly according to Embodiment 1 of the present disclosure may be directly electrically connected to the negative electrode 102 of the battery cell 10, and the first interrupt unit 91 may be disposed between the first busbar 31 and the negative electrode 102 of the battery cell 10.

As described above, the circuit board 20 may include the Micro Control Unit (MCU) 25. The micro control unit 25 may include a microprocessor, a memory, a programmable input/output module and so on. The second busbar 32 may electrically connect the chip thermistor 40 to the micro control unit 25 of the circuit board 20.

The chip thermistor 40, the first busbar, the second busbar 32 and the first interrupt unit 91 may form a busbar-thermistor group 110. The busbar-thermistor group 110 may be a physically/electrically connected and integrally formed single component as described above to simplify the structure of the battery assembly and improve the efficiency of the process.

### Embodiment 2

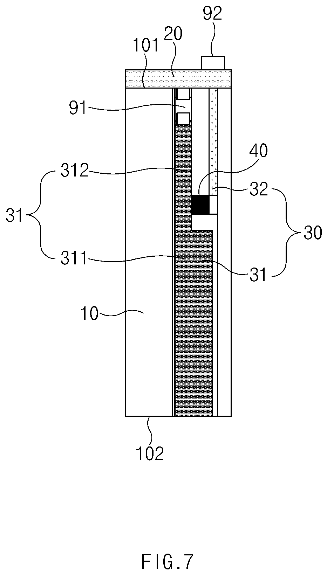

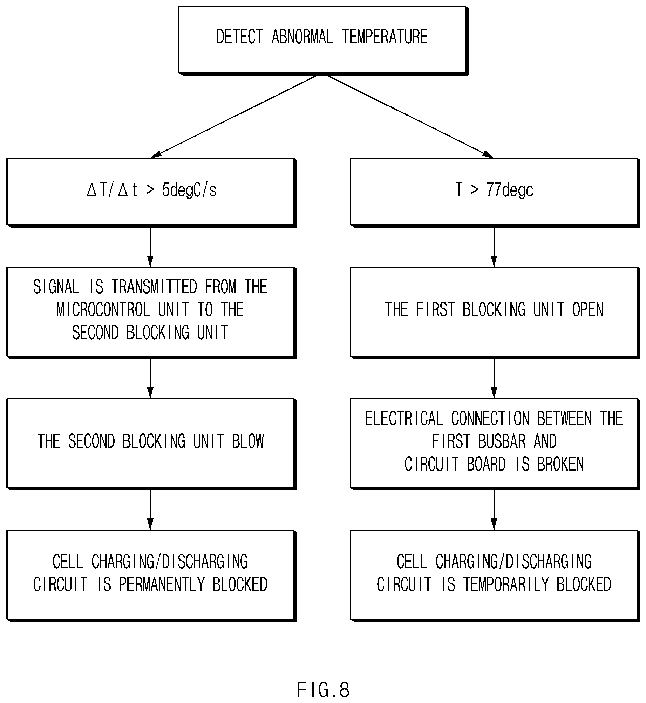

FIGS. 7 and 8 show the battery assembly according to Embodiment 2 of the present disclosure. Specifically, FIG. 7 is a front view showing a schematic structure of the battery assembly according to Embodiment 2 of the present disclosure, and FIG. 8 is a flowchart showing the current interruption mechanism of the battery assembly according to Embodiment 2 of the present disclosure.

Embodiment 2 of the present disclosure may be different from Embodiment 1, because of further including a second interrupt unit 92. It should be noted that except the difference, the above description of the battery assembly according to Embodiment 1 of the present disclosure may be equally applied to Embodiment 2, and accordingly the description that is shared with Embodiment 1 is omitted, and Embodiment 2 will be described based on the difference from Embodiment 1.

Referring to FIG. 7, the battery assembly according to Embodiment 2 of the present disclosure may further include the second interrupt unit 92. Along with the first interrupt unit 91, the second interrupt unit 92 may be configured to interrupt the flow of electric current based on the temperature of the battery cell 10. The first interrupt unit 91 and the second interrupt unit 92 may form an interrupt unit configured to interrupt the electric current flowing in the battery assembly by the medium of the temperature of the battery cell 10.

The second interrupt unit 92 may be coupled to the circuit board 20. The second interrupt unit 92 may be a fuse configured to blow upon receiving a signal from the circuit board 20. As opposed to the above-described first interrupt unit 91 (TCO) that is temporarily open to temporarily interrupt the electric current, the second interrupt unit 92 may irreversibly interrupt the charge/discharge circuit of the battery assembly. The second interrupt unit 92 may be configured to interrupt by the medium of the temperature change of the battery cell 10 over time.

Referring to FIG. 8, the battery assembly according to Embodiment 2 of the present disclosure may interrupt the electric current by two tracks (2-track) according to the temperature of the battery cell. It should be noted that the numerical value of the temperature is provided by way of example for convenience of description and is not limited thereto.

When an abnormal temperature is detected, first, in case where the temperature of the battery cell 10 is higher than the preset temperature (for example, 77°C), the first interrupt unit (TCO) electrically connecting the circuit board 20 to the first busbar 31 may be open. In this case, the electrical connection between the first busbar 31 and the circuit board 20 may be disconnected, and the charge/discharge circuit of the battery cell may be interrupted, but this state lasts only temporarily and may return to the original state when the temperature becomes normal. That is, when the temperature is higher than the preset temperature, the charge/discharge circuit of the battery cell may be temporarily interrupted by the operation of the first interrupt unit 91.

When the temperature change of the battery cell over time is larger than a preset temperature change (for example, 5°C per second), the micro control unit 25 of the circuit board 20 may transmit an interrupt signal to the second interrupt unit 92 (the fuse). When the second interrupt unit 92 having received the signal blows, the charge/discharge circuit of the battery cell may be interrupted, and because the second interrupt unit 92 cannot return to the original state when the temperature becomes normal, after the second interrupt unit 92 is replaced, the charge/discharge circuit of the battery assembly may operate again.

Although the present disclosure has been hereinabove described with regard to a limited number of embodiments and drawings, the foregoing description is provided to describe the technical aspect of the present disclosure by way of example, and a variety of modifications and change may be made thereto by persons having ordinary skill in the technical field pertaining to the present disclosure without departing from the essential features of the present disclosure.

Therefore, the disclosed embodiments of the present disclosure are provided to describe the technical aspect of the present disclosure but not intended to be limiting, and the technical scope of the present disclosure is not limited by these embodiments. The scope of protection of the present disclosure should be interpreted by the appended claims, and it should be interpreted that all technical aspects in the equivalent scope are included in the scope of protection of the present disclosure.

### [List of Reference Numerals]

10: Battery cell
101: Positive electrode
102: Negative electrode
20: Circuit board
30: Busbar
302: Negative plate
31: First busbar
311: Busbar body
312: Busbar arm
32: Second busbar
40: Chip thermistor
50: Outer packaging unit
60: Insulation unit
70: Cap
80: Taping unit
91: First interrupt unit
92: Second interrupt unit

## Claims

1. A battery assembly comprising:
a battery cell;
a circuit board coupled to the battery cell and electrically connected to the battery cell;
a chip thermistor configured to sense a temperature of the battery cell, and electrically connected to the circuit board; and
a first busbar extended between a negative electrode of the battery cell and the circuit board to electrically connect the negative electrode of the battery cell to the circuit board, and electrically connected to the chip thermistor.

2. The battery assembly according to claim 1, further comprising:
a second busbar extended between the chip thermistor and the circuit board to electrically connect the chip thermistor to the circuit board, and spaced apart from the first busbar.

3. The battery assembly according to claim 2,
wherein the chip thermistor is disposed between the first busbar and the second busbar to electrically connect the first busbar to the second busbar.

4. The battery assembly according to claim 2,
wherein the first busbar and the second busbar have different widths.

5. The battery assembly according to claim 4,
wherein the first busbar has a larger width than the second busbar.

6. The battery assembly according to claim 2,
wherein the first busbar includes a busbar body extended from the negative electrode of the battery cell, and a busbar arm extended from an end portion of the busbar body to the circuit board and having a smaller width than the busbar body.

7. The battery assembly according to claim 6,
wherein the chip thermistor connects the busbar arm to the second busbar.

8. The battery assembly according to claim 1,
wherein the battery cell has a cylindrical shape having a length direction, and the circuit board is coupled to an end portion of the battery cell in the length direction.

9. The battery assembly according to claim 8,
wherein the chip thermistor is placed apart from two end portions of the battery cell in the length direction.

10. The battery assembly according to claim 8,
wherein the chip thermistor is located at a central part of the battery cell in the length direction.

11. The battery assembly according to claim 6, further comprising:
an interrupt unit configured to interrupt an electric current based on temperature data of the battery cell sensed from the chip thermistor.

12. The battery assembly according to claim 11,
wherein the interrupt unit further includes:
a first interrupt unit coupled to the busbar arm, wherein the first interrupt unit is open to interrupt the electric current when the temperature of the battery cell is higher than a preset reference temperature.

13. The battery assembly according to claim 12,
wherein the first interrupt unit connects the busbar arm to the circuit board.

14. The battery assembly according to claim 12,
wherein the interrupt unit further includes:
a second interrupt unit coupled to the circuit board and electrically connected to the circuit board, and configured to interrupt the electric current upon receiving a signal from the circuit board when a temperature change of the battery cell is larger than a preset reference temperature change.
